# EUROPEAN PATENT APPLICATION

(11) **EP 4 762 922 A1**
(43) Date of publication of application: **24.06.2026**
(21) Application number: 24222925.0
(22) Date of filing: 23.12.2024
(51) Int. Cl.: A01M 1/02, A01M 31/00

(54) **METHODS AND SYSTEMS FOR DETECTING PESTS IN AN ENVIRONMENT**

(71) Applicant: Anticimex Innovation Center A/S, 3200 Helsinge (DK)
(72) Inventor: KLINGBERG, Hanna Elisabet Alma, 120 60 Årsta (SE); LERULF, Patrik Joachim, 114 32 Stockholm (SE); FREDLUND, Erik Gustaf, 126 37 Hägersten (SE)
(74) Representative: Zacco Denmark A/S

(57) **Abstract**

Computer-implemented methods and related aspects for detecting pests in an environment are disclosed. The computer-implemented method comprises receiving data comprising information output from a sensor arranged at a site. The sensor is configured to detect a presence of an object within its surrounding environment. Further, in response to the received data indicating a change in detections over a defined time window in comparison to a baseline, the method comprises determining whether the indicated change in detections is increasing or decreasing. Further, in response to the indicated change in detections being decreasing, the method comprises updating the baseline defining a reference for determining whether data comprising information output from the sensor represents a change in detections over the defined time window. Further, in response to the indicated change in detections being increasing, the method comprises determining whether the received data corresponds to a detection of a target object. Still further, in response to determining that the received data corresponds to a detection of the target object, the method comprises transmitting an output comprising information about a target object detection during the defined time window at the site.

## Description

### TECHNICAL FIELD

The disclosed technology relates to methods and systems for detecting pests in an environment. In particular, but not exclusively the disclosed technology relates to a data processing architecture for managing large data outputs in connected pest control systems or pest monitoring systems.

### BACKGROUND

In most cities in the world, rodents, in particular rats, are a problem. Even though pest control has developed during the last decades, severe damages are still today caused by rodents. The damages are not only direct damages, e.g. food being eaten by rodents, but also indirect damages. An example of indirect damages is that restaurants where rats or other rodents have been found need to close down their business due to non-compliance with food safety regulations. Having reliable and efficient pest control is thus important from a wide range of aspects.

However, pest control is not limited to handling of rodents, but also of insects. Problems associated with insects range from being a nuisance to actually causing tangible damages, for instance, by spreading diseases, ruining food or crops, destroying clothes, furniture, or even building materials. As a result, property, buildings or other living spaces may become uninhabitable.

New and improved methods for pest control are consequently being developed on an ongoing basis, a great deal of which is based on insecticides, pesticides, while other methods use actual traps, containing mechanical and/or electric means for pest control. The wording pests should be interpreted broadly to comprises e.g. rats, mice, ferrets, mink, and moles and rodents in general as well as insects such as e.g. cockroaches, mosquitos, flies and grasshoppers.

Accordingly, effective pest control systems are critical for minimizing property damage, protecting public health, and maintaining hygienic standards in various settings. Modern pest control systems increasingly rely on automated sensors and data collection devices to monitor pest activity. These technologies generate immense volumes of input data, primarily in the form of sensor readings, which require efficient processing and analysis.

A challenge in these systems is managing the overwhelming amount of data while ensuring accurate detection. False positive detections, where non-pest events are mistakenly identified as pest activity, are particularly problematic. These errors result in unnecessary deployment of pest control measures, leading to wasted resources, increased operational costs, and potential environmental harm. Consequently, there is a critical need for improved pest control systems that optimize data analysis, reduce false positives, and enhance the reliability of pest detection and response mechanisms.

### SUMMARY

The herein disclosed technology seeks to mitigate, alleviate or eliminate one or more of the above-identified deficiencies and disadvantages in the prior art to address various problems relating to handling the immense volumes of input data generated by pest control system employing a multitude of connected sensors.

Various aspects and embodiments of the disclosed technology are defined below and in the accompanying independent and dependent claims.

A first aspect of the disclosed technology comprises a computer-implemented method for detecting pests in an environment. The computer-implemented method comprises receiving data comprising information output from a sensor arranged at a site. The sensor is configured to detect a presence of an object within its surrounding environment. Further, in response to the received data indicating a change in detections over a defined time window in comparison to a baseline, the method comprises determining whether the indicated change in detections is increasing or decreasing. Further, in response to the indicated change in detections being decreasing, the method comprises updating the baseline defining a reference for determining whether data comprising information output from the sensor represents a change in detections over the defined time window. Further, in response to the indicated change in detections being increasing, the method comprises determining whether the received data corresponds to a detection of a target object. Still further, in response to determining that the received data corresponds to a detection of the target object, the method comprises transmitting an output comprising information about a target object detection during the defined time window at the site.

Another aspect of the disclosed technology comprises a computer program product. The computer program product comprises instructions which, when the program is executed by a computer, causes the computer to carry out the method according to any one of the embodiments disclosed herein. With this aspect of the disclosed technology, similar advantages and preferred features are present as in the other aspects.

Another aspect of the disclosed technology comprises a (non-transitory) computer-readable storage medium. The computer-readable storage medium comprises instructions which, when executed by a computer, causes the computer to carry out the method according to any one of the embodiments disclosed herein. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Pro+gram instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

Another aspect of the disclosed technology comprises a system for detecting pests in an environment. The system comprising one or more processors and one or more memory storage areas comprising program code, the one or more memory storage areas and the program code being configured to, with the one or more processors, cause the system to receive data comprising information output from a sensor arranged at a site. The sensor is configured to detect a presence of an object within its surrounding environment. The system is further caused to at least, in response to the received data indicating a change in detections over a defined time window in comparison to a baseline, determine whether the indicated change in detections is increasing or decreasing. The system is further caused to at least, in response to the indicated change in detections being decreasing, update the baseline defining a reference for determining whether data comprising information output from the sensor represents a change in detections over the defined time window. The system is further caused to at least, in response to the indicated change in detections being increasing, determine whether the received data corresponds to a detection of a target object. The system is further caused to at least, in response to determining that the received data corresponds to a detection of the target object, transmit an output comprising information about a target object detection during the defined time window at the site. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that the number of false positive detections may be reduced in pest control systems or pest monitoring systems employing large amounts of sensors for detecting pest activity.

An advantage of some embodiments is that less complex and more cost-effective sensors may be employed in in pest control systems or pest monitoring systems with less negative impact on the data quality and less processing overhead.

An advantage of some embodiments is that less complex and more cost-effective sensors may be employed in in pest control systems or pest monitoring systems, increasing the potential coverage area for monitoring for pest activity.

An advantage of some embodiments is that the data processing architecture is environment agnostic and/or pest agnostic, rendering the system easy to use with very little-to-no expertise of the inner workings of the system needed in the setup phase.

An advantage of some embodiments is that the scalability of pest control systems or pest monitoring systems may be increased as one event handler can handle more sites more efficiently.

An advantage of some embodiments is that the data processing architecture can be self-learning and therefore automatically adapted to dynamic changes, leading to an improved robustness and reliability of the pest control system.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Fig. 1 is a schematic flowchart representation of a method for detecting pests in an environment, in accordance with some embodiments.
Fig. 2 is a schematic illustration of a system for detecting pests in an environment having a plurality of sensors, in accordance with some embodiments.
Fig. 3 is a schematic block diagram representation of a system for detecting pests in an environment, in accordance with some embodiments.
Fig. 4 is a schematic illustration of an input dataset and a baseline dataset in the form of a time series, in accordance with some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus or system comprising one or more processors, one or more memories coupled to the one or more processors, where computer code is loaded to implement the method. For example, the one or more memories may store one or more computer programs that causes the apparatus or system to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

### Overview

As mentioned, a challenge for many modern pest control/monitoring systems that include connected devices relates to the management and handling of the overwhelming amount of generated data while still ensuring accurate detections of pest activity. This is particularly true in pest control/monitoring systems where rudimentary and cost-effective sensors are used to monitor various environments or sites for pest activity. Moreover, false positive detections, where non-pest events are mistakenly identified as pest activity, are particularly problematic.

To this end, the present inventors propose a data processing architecture particularly suitable for pest control/monitoring systems that employ a multitude of connected sensors, which in turn share their data with a central entity, such as a central server. In particular, the present inventors propose a system that filters irrelevant detections or irrelevant activities that are output by the sensors, thereby effectively reducing the amount of irrelevant "noise" that is to be assessed in a post processing stage. Moreover, the system may apply machine learning techniques in order to make the system environment agnostic and/or pest agnostic, rendering the system easy to use with very little-to-no expertise of the inner workings of the system needed in the setup phase. Additionally, by applying machine learning techniques, the system is capable of continuously updating itself, thereby providing more accurate and reliable output the longer it is used.

In more detail, the system employs a three-step or three-model architecture, where irrelevant data is effectively filtered out in three distinct steps or processes. Firstly, a change-point model is used to determine whether the received sensor data indicates that there has been a change in activity in comparison to a set "baseline" activity. The change in activity may for example be derived from a comparison of a pattern of the input data with a baseline pattern. In particular, the change point model may be a trained first machine-learning algorithm that is used to determine whether the input data is indicative of a change in activity or not. Next, if there is a change in activity, a check is performed to see if the determined change in activity is in the form of an increase in activity or a decrease in activity. This check may be performed by using a "direction of change" model, which may be in the form of a second trained machine-learning algorithm.

If the change in activity is increasing, another check is performed to see whether the input data corresponds to a detection of a target object (i.e., a pest, such as a rodent) or a detection of a non-target object. However, if the change in activity is decreasing, one may instead perform an update of the "baseline" that was used to discern between a change and non-change in activity.

Assuming that the activity was increasing, the system employs a target detection model that is configured to discern between "target activity" and "non-target activity", meaning that it is configured to determine whether the input data corresponds to a target object detection. The target detection model may be a third trained machine learning algorithm. If the output from the target detection model indicates that there is a target object detection, then an output is transmitted for further processing. The transmitted output indicates that a target object detection has been made at the site where the reporting sensor is located. The output may be transmitted to an event handler module so that an operator can easily determine an appropriate action to be performed at the site associated with the reported target object activity, such as for example, activate a pest control mechanism, such as a trap or deterrent, or record the event for later analysis to refine the pest control strategy.

The above presented architecture effectively removes a large share of the irrelevant output generated by the sensors, which in many cases can be an immense amount of information. In particular when one considers that a single monitoring system may receive reports originating from hundreds or even thousands of sensors. Moreover, by using the herein proposed architecture, one is able to use relatively "basic" sensors (i.e., low-precision and low-cost sensors) in large pest control systems without being overloaded by irrelevant outputs. An advantage of using more "basic" sensors in pest control systems, is that they generally are extremely power efficient and can therefore be battery-powered, which increases the scalability of the system and moreover allows for pest monitoring in far more diverse environments than would be possible with more complex, high-end sensors.

### Definitions

A "pest control system" (or "pest monitoring system" or "pest detection system") refers to a combination of components designed to detect, monitor, manage, mitigate, or eliminate unwanted organisms classified as pests, which may include insects, rodents, birds, or other wildlife that pose risks to health, safety, property, or agricultural production. Such systems may incorporate mechanical devices, chemical agents, biological controls (such as natural predators or biopesticides), electronic or digital technologies (such as sensors, automated traps, or loT-enabled devices), or a combination thereof. The system may operate in various environments, including residential, commercial, industrial, or agricultural settings, with the objective of minimizing pest populations while ensuring safety, compliance with regulatory standards, and environmental sustainability.

In the present context, a "sensor" (may also be referred to as "sensor device" or "monitoring device") refers to a device designed to detect, and sometimes identify or quantify the presence, activity, or behaviour of pests within a specific environment. These devices may operate using various technologies, such as motion detection, temperature or humidity measurement, sound/vibration analysis, infrared imaging, or chemical detection (e.g., pheromone traps), to provide real-time or periodic data that aids in pest management and prevention strategies. Such sensors aim to improve pest control efficiency by enabling early detection, minimizing the need for manual inspections, and facilitating targeted interventions.

In some embodiments, the sensors are battery-powered sensors. Moreover, the sensors may be passive sensors. Example of such sensors include Passive Infrared sensors ("PIR sensors"). A PIR sensor is an electronic device that detects motion by measuring changes in infrared (IR) radiation in its environment. All warm-bodied objects (e.g., animals) emit some level of infrared radiation as heat, and a PIR sensor is designed to sense the movement of warm bodies, such as humans or animals, against a cooler background. With similar reasoning, a PIR sensor could also be used to sense the movement of a cold body, such as an insect, against a warmer background.

The term "pest" may be construed as any animal, such as an insect, rodent, bird, or other wildlife, that is considered harmful or disruptive to human health, property, agriculture, stored goods, or the environment. Pests typically cause damage by feeding on crops, contaminating food supplies, damaging structures, or creating nuisances in residential, commercial, or industrial settings. The classification of an organism as a pest depends on the specific context and its impact. A "pest" may accordingly be understood as rats, mice, ferrets, minks, moles and rodents in general as well as insects such as cockroaches, bedbugs, mosquitos, flies and grasshoppers.

The term "baseline" may be understood as a standard or reference point against which observed data, patterns, or behaviours are compared. It represents a predefined state, condition, or expected norm that serves as a benchmark to identify deviations, anomalies, or significant changes in data. In more detail, a "baseline" or "baseline reference" may refer to a specific dataset, model, or set of criteria that establishes the baseline in a pattern recognition system. It serves as the foundational comparison standard, enabling the system to differentiate between normal and abnormal patterns or states. For example, in pest control, a baseline reference might comprise typical sensor readings in a pest-free environment (or historical readings in an environment that is being monitored), allowing the system to recognize and flag irregular activity indicative of a presence of pests.

The term "change point" or "change in detections" refers to a specific point in time or a time sequence where a shift occurs in the monitored data as compared to expected or "baseline" behaviour, indicating a potentially relevant event or anomaly. This shift could represent the onset of pest activity, a change in environmental conditions that may attract pests, or a disruption in the pest monitoring system's normal operating patterns. Change points may accordingly be used for detecting and responding to pest-related events, as they signal transitions that may require further investigation or immediate intervention. For example, in a system monitoring rodent activity, a change point might occur when a sudden increase in motion sensor activations (e.g., PIR sensor activations) is detected in a previously inactive area

The term "an event handling module" or "event handler" may refer to a software or hardware component responsible for detecting, processing, and/or responding to specific events or triggers within the system. These events could be changes in sensor readings, thresholds being exceeded, or patterns indicating pest activity or environmental changes. The event handler operates by monitoring data inputs (such as pest control/monitoring system outputs) and executing (predefined) actions when certain conditions are met. For example, in a pest control system, the event handler might trigger an alert to a technician when motion is detected by a sensor in an area where pests are not typically present, activate a pest control mechanism, such as a trap or deterrent, in response to detected activity, or record the event for later analysis to refine the pest control strategy. In short, the event handler ensures that the system responds appropriately and promptly to changes or issues, enhancing the overall effectiveness of pest management.

In the present context, the term "a time series" ("time series data" or "time series pattern") refers to a sequence of data points collected over time from one or more sensors monitoring pest activity. These data points may be recorded at consistent intervals (e.g., every minute, hour, or day) and represent the sensor readings at each time step. For example, in a pest control system, a time series could comprise sensor data such as motion detection (e.g., number of movements detected by a PIR sensor over time), temperature or humidity levels (e.g., recorded temperature changes that could correlate with pest activity), or trap status (e.g., number of pests trapped or bait consumption over time). In more detail, time series data is valuable for detecting trends, patterns, or anomalies in pest behaviour, and can be used for identifying change points, or triggering event handlers in the system.

In the present context, a "machine learning algorithm" or "machine learning model" refers to a computational model or set of techniques that are used to enable a computer to solve a task, such as for example, to interpret and understand sensor output. In more detail, a machine learning algorithm may be construed as a systematic, computer-implemented process or method comprising mathematical models and statistical techniques for analysing data, identifying patterns, and generating predictive or descriptive outputs. The algorithm iteratively adjusts its parameters based on training data to optimize performance on a defined task, enabling adaptive and autonomous decision-making or problem-solving. The machine-learning algorithms (may also be referred to as machine-learning models, neural networks, and so forth) are implemented in some embodiments using publicly available suitable software development machine learning code elements, for example, such as those which are available in PyTorch, Keras, scikit-learn, and TensorFlow or in any other suitable software development platform, in any manner known to be suitable to someone of ordinary skill in the art.

As used herein, the term "in response to" may be construed to mean "when or "upon" or "if" depending on the context. Similarly, the phrase "in response to determining" or "if it is determined' or "when it is determined" or "in an instance of" may be construed to mean "upon determining" or "upon detecting and identifying occurrence of an event" or "in response to detecting occurrence of an event" depending on the context. Accordingly, the phrase "in response to X being equal to Y" may be construed as "when X equals Y", "if X equals Y", "when it is determined that X equals Y", or "in response to detecting/determining that X equals Y" depending on the context.

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc. Thus, as used herein, "obtaining" may indicate that a parameter is received at a first entity/unit from a second entity/unit, or that the parameter is determined at the first entity/unit e.g. based on data received from another entity/unit.

### Example Embodiments

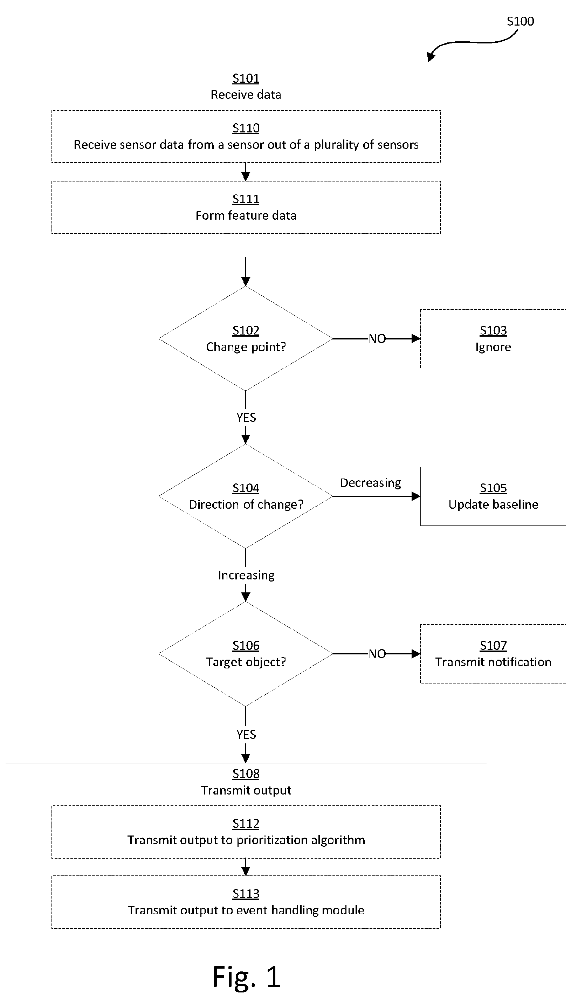

Fig. 1 is a schematic flowchart representation of a (computer-implemented) method for detecting pests in an environment in accordance with some embodiments. The method S100 is preferably a computer-implemented method S100, performed a processing system. The processing system may for example comprise one or more processors and one or more memories coupled to the one or more processors, wherein the one or more memories store one or more programs that perform the steps, services and functions of the method S100 disclosed herein when executed by the one or more processors. The processing system may for example be an integrated part of a pest control system.

The method S100 comprises receiving S101 data comprising information output from a sensor arranged at a location at a site. Here, the sensor is configured to detect a presence of an object within its surrounding environment. In some embodiments, the received S101 data comprises information output from a plurality of sensors arranged at different locations at the site.

The received data may for example be raw sensor data, or processed sensor data depending on the specific implementation. Thus, the term "data comprising information output from a sensor" may be understood as "data indicative of an output from a sensor", "data comprising information that is output from a sensor", "data comprising information about an output from a sensor", "data comprising an output from a sensor", "data comprising an output originating from a sensor", "data comprising information originating from a data output of a sensor", or the like.

Moreover, the sensor may be in the form of a rudimentary sensor with limited performance in terms of data resolution and quality of the output. For example, the sensor may be configured to detect a single parameter or simple changes in its environment such as motion, temperature, or light. Moreover, the sensor may be configured to only provide a binary output (e.g., "on" and "off" states) or simple readings (e.g., a single value). The sensor may for example be a passive sensor. The sensor may be a battery-powered sensor. An example of suitable passive sensors that may be battery powered are PIR sensors that are configured to detect the presence or absence of movement.

The one or more sensors may for example be arranged in a typical environment ("site") for pest control or pest monitoring such as an agricultural field or farm, a food storage and processing facility, a greenhouse, an indoor farm, a residential home, a commercial or industrial building, a hospital, healthcare facility, a supermarket, and so forth. The one or more sensors may be positioned at different locations within the same site (e.g., within the same farm, food storage facility, or residential home). However, as readily understood by the skilled reader, the method S100 is analogously applicable for clusters of sensors positioned at different sites (e.g., in different farms, food storage facilities, or residential homes). However, if the system employs sensors across various sites, it may be necessary to specify a specific "baseline" for each environment/site or at least for each type of environment/site as each environment/site or type of environment/site is generally associated with independent conditions and properties.

The method S100 may further comprise determining S102 whether the received data indicates a change in detections or change in activity over a defined time window in comparison to a baseline. In other words, the method S100 may comprise determining S102 whether the received data is indicative of a change point. As mentioned, a change point refers to a specific point in time or a time sequence where a shift occurs in the monitored data as compared to expected or "baseline" behaviour. The defined time window may be set in dependence of the specific implementation and thereto associated needs. For example, the defined time window may be a minute, 30 minutes, an hour, 4 hours, 24 hours, and the like. The terms "change in detections" and "change in activity" may be used interchangeable herein.

Further, in response to the received S101 data indicating a change in detections or activity over a defined time window in comparison to a baseline, the method S100 comprises determining S104 whether the indicated change in detections or activity is increasing or decreasing.

Moreover, in response to the indicated change in detections being decreasing, the method S100 comprises updating S105 the baseline. As mentioned, the baseline defines a reference for determining whether data comprising information output from the one or more sensors represents a change in detections over the defined time window. In other words, if the detected S102 change point indicates that there is a decrease in activity, the baseline is updated S105 based on the received S101 data. This may be advantageous in order to be able to adapt the pest control/monitoring system to dynamic changes in the environment and therefore render the system more accurate. For example, if the baseline for a specific site was set or configured during a period of temporarily high, albeit irrelevant, activity, then the baseline may not be suitable for detecting change points at later points in time when the irrelevant activity is low, which could result in a large number of missed detections. Therefore, in order to reduce the risk of missed detections (false negatives), the baseline is updated S105 when the indicated change in detections is decreasing.

However, in response to the indicated change in detections being increasing, the method S100 comprises determining S106 whether the received data corresponds to a detection of a target object (i.e., a specific pest). Then, in response to determining that the received data corresponds to a detection of the target object, the method S100 comprises transmitting S108 an output comprising information about a target object detection during the defined time window at the site. The transmitted S108 output may accordingly comprise the site where the target objection was made and an indication of the target object detection. The transmitted S108 output may comprise a sensor identification (sensor ID). The sensor ID may be associated with a specific site or a location within a specific site to enable the event handling module to infer the location or site that resulted in a target object detection (i.e., pest activity). The output may be transmitted to an event handling module either directly or via a prioritization algorithm. Thus, in some embodiments, the transmitting S108 comprises, transmitting S112 the output to a prioritization algorithm configured to flag (e.g., classify) and rank (e.g., prioritize) the output. Furthermore, the method S100 may comprise, transmitting S113 an output from the prioritization algorithm (i.e., the flag and rank) to an event handling module.

The prioritisation algorithm may be understood as a computational method designed to analyse, flag, and rank pest activity detections based on predefined criteria such as urgency, severity, frequency, location, or potential impact. This algorithm, which may include heuristic approaches, may accordingly be configured to receive the output from the target detection model (and optionally the output of the change point model and/or the direction of change model) to assign priority levels, enabling targeted and efficient responses to pest activity. Thus, in some embodiments, the output from each of the models (change point model, direction of change model, and the target detection model) is transmitted to the prioritization algorithm for determining a flag and rank of the detected pest activity as indicated by the target object detection.

The determining S106 whether the received S101 data corresponds to a detection of a target object may comprise, determining S106, using a target detector machine learning algorithm, whether the received data corresponds to a detection of a target object. The target detector machine learning algorithm is accordingly configured to consume the received S101 data as input and to output data indicating whether the received data corresponds to a detection of the target object (i.e., a specific pest). In other words, the determining S106 whether the received data corresponds to a detection of a target object may comprise feeding the received data as input to a trained machine learning algorithm configured to classify the received data as a target detection or a non-target detection, and determining whether the received data corresponds to a detection of a target object based on an output from the trained machine learning algorithm.

The target detector machine learning algorithm may be trained in accordance with a supervised learning process, where the machine learning algorithm is trained using input objects (e.g. data in the same form as the received data) and desired output values (also known as a supervisory signal), which are labels or annotations providing a ground-truth. In more detail, the machine learning algorithm is provided with a dataset that contains input-output pairs, where each input object is associated with a correct output (label or target). The machine learning algorithm analyses the training data and identifies patterns or relationships between the inputs and the outputs. It may use a predefined objective function (like minimizing prediction error) to adjust its internal parameters. The machine learning algorithm then iteratively optimizes its parameters using methods like gradient descent to reduce the difference between its predictions and the true labels. Once trained, the machine learning algorithm is tested on a separate set of labelled data (validation or test data) to evaluate its accuracy and generalization performance. In the present context, the desired/correct output forming the ground truth may for example be obtained based on historical data where the intended input data (information output from a sensor) is correlated with a verified presence of pests or where a set of intended input data has been analysed by experts that provide the appropriate labels/annotations.

The supervised learning process may be applied to any other machine learning algorithm used in the herein proposed architecture in an analogous manner, such as the aforementioned change point model and the direction of change model.

As mentioned, the received data S101 may be processed sensor data. In more detail, the received data may be in the form of feature data, where the feature data is formed based on the data output from the one or more sensors. Feature data may be understood as a processed or transformed form of raw sensor data that is prepared and formatted for input into a machine learning model to detect pest activity. This data typically represents key attributes or patterns extracted from the raw sensor readings, designed to capture meaningful information for the task at hand. In the context of machine learning, these features serve as the inputs the model uses to identify relationships, make predictions, or perform classifications. In cases where the sensor data is derived from raw signals collected by rudimentary sensors, such as microphones, motion detectors (PIR sensors), or temperature sensors, the model is designed to capture meaningful patterns or indicators related to pest behaviour in the data over time.

Feature data often undergoes various pre-processing steps, such as normalization, scaling, or encoding, to make it suitable for machine learning algorithms. The feature data may be provided in the form of encoded sensor data, meaning that the raw sensor readings have been converted into a structured and machine-readable format, often by techniques such as one-hot encoding, Fourier transforms, or other domain-specific feature extraction methods. The encoded sensor data may be represented as a set of feature vectors in a multi-dimensional embedding space. Each feature vector encapsulates the key characteristics or patterns derived from the raw sensor readings, and the embedding space provides a mathematical representation where each dimension corresponds to a specific feature or attribute. Moreover, feature vectors may be understood as numerical arrays, where each element corresponds to a processed or encoded characteristic of the sensor data, such as frequency components (e.g., frequency of detections), signal intensities (e.g., amplitude of detections), or statistical measures (e.g., number of detections). The embedding space may be understood a multi-dimensional space where the feature vectors are positioned, allowing relationships, patterns, or clusters to emerge, which can be leveraged by machine learning models to detect or classify phenomena (e.g., pest activity).

Accordingly, to make the sensor data more usable for machine learning, it undergoes pre-processing and feature extraction. This might involve converting the raw signals into structured representations that highlight relevant characteristics of pest activity. For example, acoustic sensors might capture raw audio signals, which are then processed into features like sound intensity, frequency patterns, or temporal variations that correlate with specific pest noises (e.g., chewing, scratching, or chirping). Similarly, motion sensors (e.g., PIR sensors) could provide raw movement data, which may be encoded into features such as movement frequency, duration, or specific patterns indicative of pest activity. Environmental sensors like temperature or humidity might contribute features that describe conditions favourable to pests, such as thresholds or trends that trigger pest emergence.

Accordingly, the feature data (e.g., encoded sensor data) that serves as the input to the machine learning model, enables it to detect pest activity by identifying patterns and anomalies within the extracted features. By converting rudimentary sensor readings into meaningful feature data, the pest control/monitoring system becomes capable of more accurately identifying pest presence or behaviour and providing actionable insights for pest control interventions.

Thus, in some embodiments, the receiving S101 data comprises receiving S110 sensor data from a sensor arranged at a site, and forming Sill feature data based on the received sensor data. Accordingly, the data processing steps S102, S104, S106 may be performed based on the formed feature data.

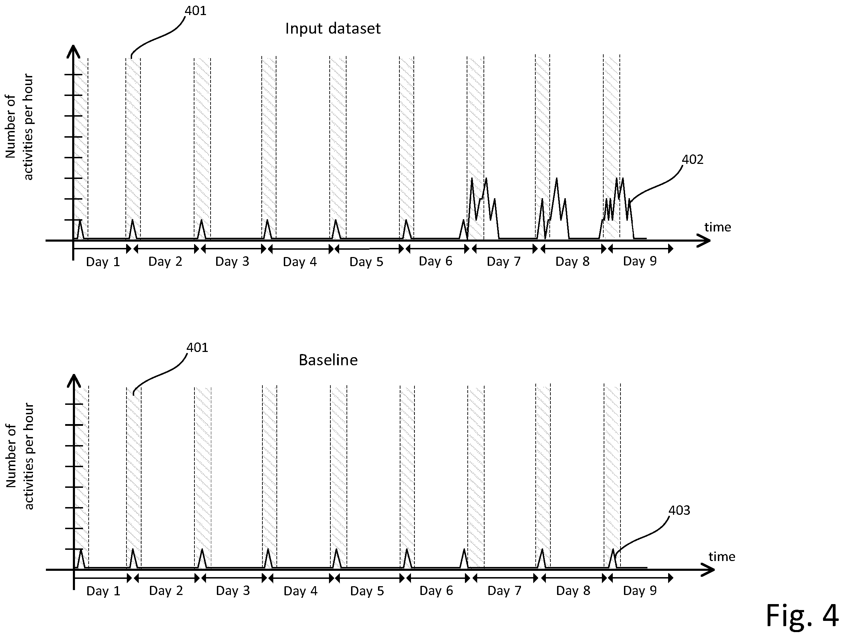

Moreover, in some embodiments, the received data comprises time series data. Thus, in the present context, time series data may be understood as a type of feature data. Fig. 4 is a schematic illustration of an input dataset 402 and a baseline dataset 403 in the form of time series data. In more detail, the input dataset may be the received S101 data, while the baseline dataset may be the "baseline" against which the received data is compared to identify a change point.

In order to generate time series data from sensor data one may use the following process. Here it is assumed that a rudimentary sensor is used, which is only capable of generating a binary output indicating a detection of a presence of an object by detecting motion, such as e.g., a PIR sensor. Firstly, the output from the sensor is collected and stored. The sensor may provide a digital signal, typically HIGH ("1") when motion is detected and LOW ("0") when no motion is detected. Next, the sensor data may be time-stamped. For example, one can use a microcontroller or data acquisition system to periodically read the sensor output, and to associate each sensor reading with a timestamp, using a consistent sampling interval (e.g., every 100 ms). Further, the readings are stored by recording the binary output (0 or 1) along with the timestamps into a data structure (such as a CSV file or a database). Lastly, one may smoothen or otherwise process the data for subsequent analysis. In particular, one may aggregate the stored readings in suitable bins, for example on an hourly basis (i.e., 24 bins for a 24-hour period). Thereby, one gets an efficient representation of the sensor detections over a day (24 hours) presenting the detections made between during each hour of the day. The time series can then be analysed for trends, activity patterns, or trigger events in accordance with the embodiments discussed herein.

In Fig. 4, the schematically depicted time series represent an activity pattern based on an output from a sensor configured to detect a presence of an object within its surrounding environment. Here, the sensor data is converted to a time series representing activity counts per hour over 9 days. Thus, there are 24 "bins" for each day. The shaded regions may for example represent specific hours during day associated with increased probability of activity (e.g., between 23:00 and 03:00 or similar). The single activity detection each day in the baseline pattern may for example be due to a routine activity in that specific environment (e.g., a passage of a security guard). However, as indicated by the input dataset pattern 402, there are change points with an increase in activity at days 7-9 as compared to the baseline pattern. Thus, the time series pattern may be fed to the target detector machine learning algorithm to infer whether the activity pattern 402 is indicative of a target object detection or not.

Accordingly, in some embodiments, the change in detections over the defined time window in comparison to the baseline is a change in a pattern of detections over the defined time window in comparison to a baseline pattern. The pattern of detections may comprise a time series pattern 402 and the baseline pattern may comprise a baseline time series pattern 403. Moreover, the pattern of detections may comprise information about an amplitude of detections, a frequency of detections, and a number of detections, and the baseline pattern may comprise information about a baseline amplitude of detections, a baseline frequency of detections, and a baseline number of detections.

Further, in some embodiments, the method S100 comprises, in response to the received data not indicating a change in detections over the defined time window in comparison to the baseline, ignoring S103 the received data. Here, the term "ignoring" is to be construed broadly and may encompass discarding or storing without invoking any further processing of the received data.

Still further, in some embodiments, the method S100 comprises, in response to determining that the received data corresponds to a non-target object, transmitting S107 a notification indicating a predefined action to be performed. In more detail, if the processing of the receive data indicates that a change point has been identified S102, and the direction of change has been determined as increasing, but the detection is a non-target detection (i.e., not a pest activity) it can be used as input to an event handling module to determine an appropriate action to be performed. For example, one may move or remove the sensor that generated that output as the area that it is monitoring appears to be generating irrelevant detections. By moving or removing the sensor one can reduce the amount of irrelevant outputs in the receive data in the future. For example, initially one may position a multitude of sensors at various random locations within an environment to be monitored for pest activity. Then, if some sensors output detections that indicate significant amount of non-target activity, then the placement of those sensors may be reconsidered in order to not drown out the relevant detections (i.e., pest activity detections) with irrelevant noise. Thus, in some embodiments, the predefined action may be an instruction to move or remove the sensor that detected the non-target object. However, one may apply a threshold for the number of non-target detections that needs to be reached before the predefined action is performed. The notification may be transmitted S107 to the above-mentioned prioritization algorithm that determines the predefined action to be performed, which is subsequently sent to the event handler module. Alternatively, the notification may be transmitted S107 to the event handler module, that in turn is configured to determine the predefined action to be performed.

Executable instructions for performing these functions are, optionally, included in a non-transitory computer-readable storage medium or other computer program product configured for execution by one or more processors.

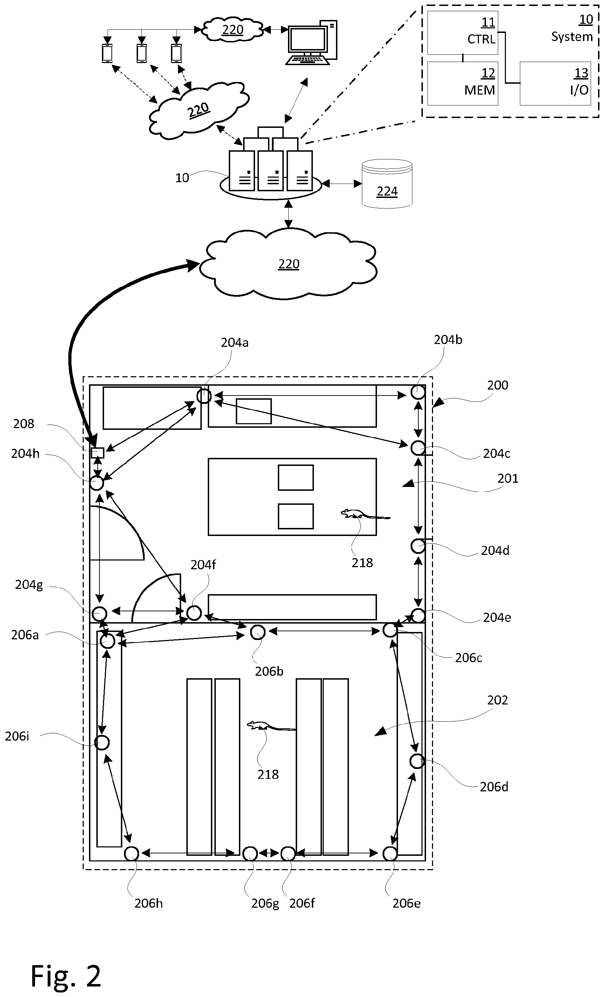

Fig. 2 is a schematic illustration of a system 10 for detecting pests 218 in an environment or site 200 in accordance with some embodiments. The system 10 may be a pest control system. The system 10 comprises control circuitry (e.g. one or more processors) 11 configured to perform the functions of the method S100 disclosed herein, where the functions may be included in a non-transitory computer-readable storage medium 12 or other computer program product configured for execution by the control circuitry 11. In other words, the system 10 comprises one or more memory storage areas 12 comprising program code, the one or more memory storage areas 12 and the program code configured to, with the one or more processors 11, cause the system 10 to perform the method S100 according to any one of the embodiments disclosed herein. The system 10 may further comprise suitable input/output interfaces 13 for receiving and transmitting data as readily understood by the skilled person in the art.

In more detail, Fig. 2 depicts a schematic overview of an environment, otherwise referred to as a site, having two rooms 201, 202, herein referred to as a first and a second monitored area 201, 202. In this particular example, the first monitored area 201 covers a kitchen, and the second monitored area 202 covers a storage room accessible via the kitchen 201. Even though the illustrated example provides for that both rooms 201, 202 are encompassed in the same site or environment 200, it is also possible to have each room defining an independent site, or a part of a room being defined as an independent site.

As illustrated, in the first monitored area 200, first cluster of sensors 204a-h can be placed, and in the second monitored area 202, a second cluster of sensors 206 a-i can be placed. The sensors 204a-h, 206a-i may be arranged with data communication modules such that they can communicate with each other via wireless data transmission. By way of example, the sensors 204a-h, 206a-i may be configured to communicate with each other in the form of a mesh network, i.e. each sensor may function both as a device for capturing sensor data as well as a data communication bridge. Having the data communication set up in this form, or other arrangement providing for that communication between a gateway 208 and the different sensors 204a-h, 206a-i can be made directly as well as indirectly via one or several of the other sensors, comes with the benefit that set up can be facilitated and also that reliability can be assured. By having the different sensors, it is namely possible to find new communication paths if one of the sensors are lost or inactive due to e.g. power failure. In case the sensors are battery-powered, sleep signals may be used to inactivate the data communication between the different sensors such that the data communication can be limited to certain time periods. By having the data communication limited to e.g. 30 seconds every ten minutes, it is made possible to use dynamical and non-hierarchical data communication approaches, such as mesh networks, and at the same time offer extensive battery life times. For instance, by restricting the data communication as presented above, the battery lifetime may be extended up to five times compared to using standard mesh network protocols.

The gateway 208, sometimes also referred to as a hub, may be connected to a data communications network 220, such as Internet or a cellular network, such that data sets captured by the sensors and communicated to the gateway 208 can be transferred to a data processing apparatus 10 and a database 224. The data processing apparatus 10 may be a remote server and several gateways may transfer data to the same server. Even though there are advantages with having the data processing apparatus 10 arranged as a remote server in communication with a plurality of sites, it is also possible to have the data processing apparatus 10 configured to handle data from one specific site, such as the depicted environment 200. In case the data processing apparatus 10 is only to communicate with one gateway 208, then it may in such situation be integrated in the gateway 208.

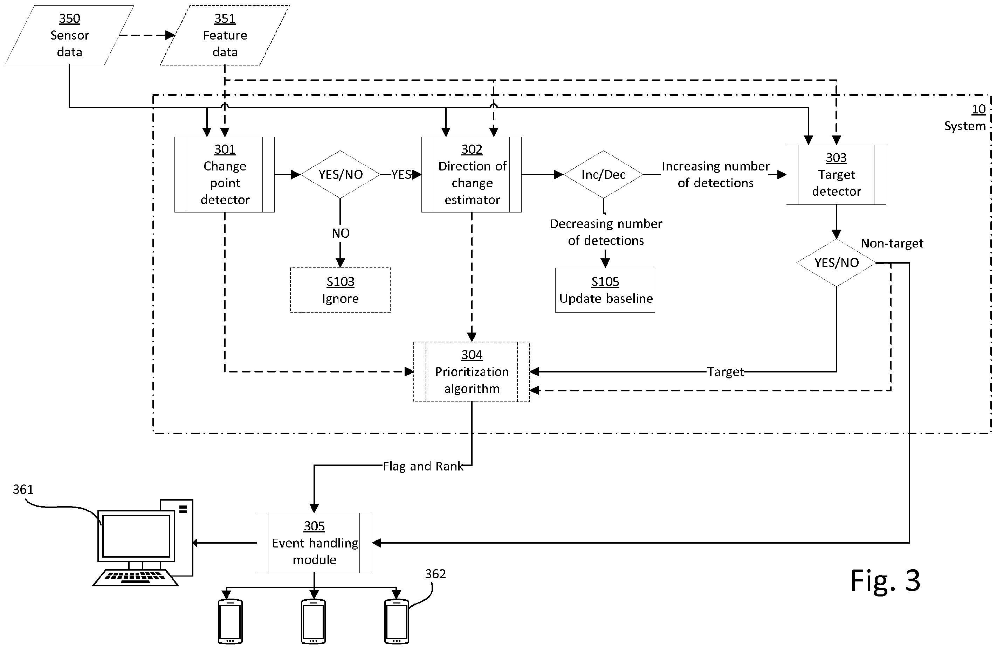

Turning now to Fig. 3, there is illustrated a schematic block diagram representation of a system 10 for detecting pests in an environment, such as the system 10 depicted in Fig. 2. In order to better elucidate the herein disclosed embodiments, the control circuitry 11 is represented as various modules or blocks 301-304 in Fig. 3, each of them linked to one or more specific functions of the control circuitry 11.

In more detail, the system 10 is configured to receive data comprising information that is output from a sensor 204a-h, 206a-i arranged at the site 200. Here, the sensor 204a-h, 206a-i is configured to detect a presence of an object within its surrounding environment (i.e., within its sensor range). The received data may for example be in the form of sensor data 350 (i.e., measuring points reported from the sensors 204a-h, 206a-i) or feature data 351. Thus, the data flow of sensor data 350 and feature data 351 into the system 10 is not intended to be construed as parallel data feeds into the system 10 depicted in Fig. 3, but as alternative data feeds.

Firstly, the received data is processed using a change point detection model 301, which is configured to identify if the received data indicates a change in detections or activity over a defined time window in comparison to a baseline. Stated differently, the change point detection model 301 is configured to determine whether the received data is representative of a change point as compared to a baseline. If no change point is detected in the received data, the data can simply be ignored (i.e., it will not trigger any further actions in the system 10). It is expected that a majority of sensor detections will effectively be filtered out by the change point detection model 10, thereby reducing the computational load of the system 10 over time, and also alleviating the time-consuming task of manually reviewing all the input data in the case it would be fed directly to an event handling module 305. The change point detection model 301 may be a trained machine learning algorithm as mentioned in the foregoing.

However, in response to the received data indicating a change in detections over a defined time window in comparison to a baseline, the system is configured to determine whether the indicated change in detections or activity is increasing or decreasing. In other words, if a change point is identified in the received data, the system 10 proceeds to check whether the change point is representative of an increase in activity or decrease in activity. This may for example be done by using a direction of change model 302 configured to determine whether the indicated change in detections or activity is increasing or decreasing. The direction of change model 302 may be a trained machine learning algorithm as mentioned in the foregoing.

If the direction of change model 302 indicates a decreasing change in detections or activity, the system 10 is configured to update the baseline that is used to discern a change-point in the received data. The update to the baseline may for example be done by aggregating sensor data or feature data from the site over a defined time period (e.g., 3 days, 7 days, 14 days, or 30 days) and processing the aggregated data to form the baseline by for example averaging or smoothing operations. However, if the direction of change model 302 indicates an increasing change in detections or activity, the system 10 is configured to determine whether the received data corresponds to a detection of a target object 218 (i.e., the monitored pest) or not.

This may for example be done by using a target detection model 303 configured to determine whether the received data corresponds to a target detection/target activity or a non-target detection/non-target activity. The target detection model 303 may be a trained machine learning algorithm as mentioned in the foregoing.

In response to determining that the received data corresponds to a detection of the target object, the system 10 may be configured to transmit an output comprising information about a target object detection during the defined time window at the site. In some embodiments, the output may be transmitted to a prioritization algorithm 304 configured to transmit data comprising an event flag and event rank to an event handling module 305 based on the output received from the target detection model 303. The event flag may for example be a simple notification indicating that a target object has been detected at a specific site, while the rank may specify a priority of the detection based on one or more predefined rules.

Some examples of one or more predefined rules for determining an event priority includes:
- Certain environments/locations may be associated with higher priorities in case of a target object detection as compared to other environments/locations. For example, a target object detection in a healthcare facility may be flagged with a higher event priority than a target object detection in a warehouse.
- A target detection associated with a higher change point (e.g., above a threshold) may be associated with a higher priority than a target detection associated with a lower change point (e.g., below the threshold).
- A target detection associated with a higher increase in change of activity (e.g., above a threshold) may be associated with a higher priority than a target detection associated with a lower increase in change of activity (e.g., below the threshold).

In some embodiments, the output from each model 301-303 is provided as input to the prioritization algorithm 304 to determine an event flag and event rank to be transmitted to the event handling module 305.

However, if the target detection model 303 would instead output that the received data corresponds to a non-target detection or non-target activity, a notification indicating a predefined action to be performed may be transmitted. The notification may be transmitted to the event handling module 305 or to the prioritization algorithm 304 for assigning a flag and rank to the notification. In other words, in response to the determining that the received data corresponds to a non-target object, the system 10 may be configured to transmit a notification indicating a predefined action to be performed. The predefined action may for example be a suggestion to move or remove the sensor associated with the non-target object detection.

The event handling module 305 may be configured to cause an electronic device to display, via a display apparatus of the electronic device, a graphical user interface comprising a graphical representation comprising the target object and the site where the target object detection was made. The graphical representation may further comprise an event flag and an event rank of the target object detection. The electronic device may for example be a computer 361 or a handheld device 362 of a pest technician.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media coupled to computer system via a bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11 (associated with the system 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various receiving steps, determining steps, updating steps, ignoring steps and transmitting steps. The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A computer-implemented method (S100) for detecting pests in an environment, the computer-implemented method comprising:
receiving (S101) data comprising information output from a sensor arranged at a site, wherein the sensor is configured to detect a presence of an object within its surrounding environment;
in response to the received data indicating a change in detections over a defined time window in comparison to a baseline:
determining (S104) whether the indicated change in detections is increasing or decreasing;
in response to the indicated change in detections being decreasing:
updating (S105) the baseline defining a reference for determining whether data comprising information output from the sensor represents a change in detections over the defined time window;
in response to the indicated change in detections being increasing:
determining (S106) whether the received data corresponds to a detection of a target object;
in response to determining that the received data corresponds to a detection of the target object:
transmitting (S108) an output comprising information about a target object detection during the defined time window at the site.

2. The computer-implemented method (S100) according to claim 1, further comprising:
in response to the received (S101) data not indicating a change in detections over the defined time window in comparison to the baseline:
ignoring (S103) the received data.

3. The computer-implemented method (S100) according to claim 1 or 2, in response to determining that the received data corresponds to a non-target object:
transmitting (S107) a notification indicating a predefined action to be performed.

4. The computer-implemented method (S100) according to any one of claims 1-3, wherein the sensor is a battery powered sensor.

5. The computer-implemented method (S100) according to any one of claims 1-4, wherein the sensor is a Passive Infrared Sensor.

6. The computer-implemented method (S100) according to any one of claims 1-5, wherein the received data comprises time series data.

7. The computer-implemented method (S100) according to any one of claims 1-6, wherein the change in detections over the defined time window in comparison to the baseline is a change in a pattern of detections over the defined time window in comparison to a baseline pattern.

8. The computer-implemented method (S100) according to claim 7, wherein the pattern of detections comprises a time series pattern and wherein the baseline pattern comprises a baseline time series pattern.

9. The computer-implemented method (S100) according to any one of claims 7-8, wherein the pattern of detections comprises information about an amplitude of detections, a frequency of detections, and a number of detections, and wherein the baseline pattern comprises information about a baseline amplitude of detections, a baseline frequency of detections, and a baseline number of detections.

10. The computer-implemented method (S100) according to any one of claims 1-9, wherein determining (S106) whether the received data corresponds to a detection of a target object comprises determining, using a trained machine learning algorithm configured to classify the received data as a target detection or a non-target detection, whether the received data corresponds to a detection of a target object.

11. A computer program product comprising instructions which, when the program is executed by a computer, causes the computer to carry out the computer-implemented method (S100) according to any one of claims 1-10.

12. A computer-readable storage medium comprising instructions which, when executed by a computer, causes the computer to carry out the computer-implemented method (S100) according to any one of claims 1-10.

13. A system (10) for detecting pests (218) in an environment (200), the system comprising one or more processors (11) and one or more memory storage areas (12) comprising program code, the one or more memory storage areas and the program code being configured to, with the one or more processors, cause the system (10) to:
receive data comprising information output from a sensor (204a-h, 206a-i) arranged at a site, wherein the sensor (204a-h, 206a-i) is configured to detect a presence of an object within its surrounding environment;
in response to the received data indicating a change in detections over a defined time window in comparison to a baseline:
determine whether the indicated change in detections is increasing or decreasing;
in response to the indicated change in detections being decreasing:
update the baseline defining a reference for determining whether data comprising information output from the sensor represents a change in detections over the defined time window;
in response to the indicated change in detections being increasing:
determine whether the received data corresponds to a detection of a target object (218);
in response to determining that the received data corresponds to a detection of the target object (218):
transmit an output comprising information about a target object detection during the defined time window at the site.

14. The system (10) according to claim 13, wherein the one or more memory storage areas (12) and the program code are further configured to, with the one or more processors (11), cause the system (10) to at least:
in response to the received data not indicating a change in detections over the defined time window in comparison to the baseline:
ignore the received data.

15. The system (10) according to claim 13 or 14, wherein the one or more memory storage areas (12) and the program code are further configured to, with the one or more processors (11), cause the system (10) to at least:
in response to determining that the received data corresponds to a non-target object:
transmit a notification indicating a predefined action to be performed.
